# EUROPEAN PATENT APPLICATION

(11) **EP 4 796 751 A1**
(43) Date of publication of application: **26.08.2026**
(21) Application number: 26156443.9
(22) Date of filing: 04.02.2026
(51) Int. Cl.: F01D 5/18

(54) **AIRFOIL FOR A GAS TURBINE WITH INCLINED COOLING OUTLETS**

(30) Priority: 24.02.2025 US 202519060983
(71) Applicant: General Electric Company, Cincinnati, Ohio 45215 (US)
(72) Inventor: GALLIER, Kirk Douglas, West Chester, 45069 (US); WEBSTER, Zachary Daniel, West Chester, 45069 (US); GONYOU, Craig Alan, West Chester, 45069 (US); CORSETTI, Brian, Lynn, 01910 (US)
(74) Representative: Openshaw & Co.

(57) **Abstract**

An airfoil (92) for a turbine engine (10) has an outer wall (106) bounding an interior (116) and defining an outer surface extending between a leading edge (112) and a trailing edge (114) in a chordwise direction, and between a root (98) and a tip (100) in a spanwise direction. A cooling circuit (128) within the interior (116) and a plurality of elongated outlets (130) fluidly coupled to the cooling circuit (128) and opening onto the outer wall (106), the plurality of elongated outlets (130) having a first elongated outlet (130a) and a second elongated outlet (130b).

## Description

### TECHNICAL FIELD

The disclosure generally relates to an airfoil for a turbine engine.

### BACKGROUND

Turbine engines, and particularly gas or combustion turbine engines, are rotary engines that extract energy from a flow of combusted gases passing through the engine and flowing over a multitude of airfoils, including stationary vanes and rotating turbine blades.

Gas turbine engines for aircraft are designed to operate at high temperatures to maximize engine efficiency, so cooling of certain engine components, such as the high pressure turbine and the low pressure turbine, can be beneficial. Typically, cooling is accomplished by ducting cooler air from the high and/or low pressure compressors to the engine components that require cooling. Temperatures in the high pressure turbine are around 1000 °C to 2000 °C and the cooling air from the compressor is around 500 °C to 800 °C. While the compressor air is a high temperature, it is cooler relative to the turbine air, and can be used to cool the turbine.

Contemporary turbine blades and other engine components generally include one or more interior cooling circuits for routing the cooling air through the engine component to cool different portions of the engine component and can include dedicated cooling circuits for cooling different portions of the engine component.

### BRIEF DESCRIPTION OF THE DRAWINGS

A full and enabling disclosure, including the best mode thereof, directed to one of ordinary skill in the art, is set forth in the specification, which makes reference to the appended figures in which:
FIG. 1 is a schematic cross-sectional diagram of a gas turbine engine for an aircraft, the gas turbine engine including a compression section, a combustion section and a turbine section, the turbine section having a set of turbine blades in accordance with various aspects described herein.
FIG. 2 is a schematic perspective view of an airfoil assembly suitable for use within the turbine engine of FIG. 1, further illustrating an airfoil having an outer wall and a plurality of elongated outlets, the plurality of elongated outlets located within an outlet region of the outer wall in accordance with various aspects described herein.
FIG. 3 is a schematic cross-sectional view of a portion of the airfoil assembly as seen from sectional line III-III from FIG. 2, further illustrating a cooling passage extending through the airfoil and opening to a respective one of the plurality of elongated outlets in accordance with various aspects described herein.
FIG. 4 is a schematic enlarged planform view of the outlet region of FIG. 2 further illustrating a serial arrangement of the plurality of elongated outlets in a chordwise direction of the airfoil in accordance with various aspects described herein.
FIG. 5 is a schematic enlarged planform view of the outlet region of FIG. 2 further illustrating a serial arrangement of the plurality of elongated outlets in a chordwise direction of the airfoil in accordance with various aspects described herein.
FIG. 6 is a flow chart illustrating a method of forming the airfoil of FIG. 2.

### DETAILED DESCRIPTION

Aspects of this disclosure are related to a turbine engine. The turbine engine has an engine centerline. The airfoil includes an outer wall, cooling circuit, and a plurality of elongated outlets. The outer wall defines an interior. The outer wall extends between a leading edge and a trailing edge in a chordwise direction. The cooling circuit is located in the interior. The plurality of elongated outlets is located along the outer wall. Each elongated outlet of the plurality of elongated outlets includes a major axis. The major axis of a first elongated outlet closest to the leading edge in the chordwise direction forms a reference line and the major axis of each subsequent elongated outlet forms an outlet angle. The outlet angle serially increases in the chordwise direction between each elongated outlet of the plurality of elongated outlets.

During operation, a flow of cooling fluid is fed through the plurality of elongated outlets and to the outer wall. The plurality of elongated outlets being arranged such that the outlet angle serially increases in the chordwise direction orients the major axis of each elongated outlet such that the major axis is perpendicular to a localized airflow (e.g., a working airflow) flowing over the elongated outlet. The perpendicular alignment of the major axis with the localized airflow at each elongated outlet increases the cooling efficiency of the flow of cooling fluid fed through the plurality of elongated outlets.

For purposes of illustration, the present disclosure will be described with respect to a turbine engine. It will be understood, however, that aspects of the disclosure described herein are not so limited and that an airfoil as described herein can be implemented in various engines, including but not limited to turbojet, turboprop, turboshaft, and turbofan engines. Aspects of the disclosure discussed herein may have general applicability within non-aircraft engines having an airfoil, such as other mobile applications and non-mobile industrial, commercial, and residential applications.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore / forward can mean upstream and aft / rearward can mean downstream.

Additionally, as used herein, the terms "axial" and "longitudinal" both refer to a direction parallel to a centerline axis of an object, while the terms "radial" or "radially" refer to a direction that is perpendicular to the axial direction or away from a common center. For example, in the overall context of a turbine engine, radial refers to a direction along a ray extending between a center longitudinal axis of the engine and an outer engine circumference. Furthermore, as used herein, the term "set" or a "set" of elements can be any number of elements, including only one.

Further, as used herein, the term "fluid" or iterations thereof can refer to any suitable fluid within the gas turbine engine at least a portion of the gas turbine engine is exposed to such as, but not limited to, combustion gases, ambient air, pressurized airflow, working airflow, or any combination thereof. It is yet further contemplated that the gas turbine engine can be another suitable turbine engine such as, but not limited to, a steam turbine engine or a supercritical carbon dioxide turbine engine. As a non-limiting example, the term "fluid" can refer to steam in a steam turbine engine, or to carbon dioxide in a supercritical carbon dioxide turbine engine.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

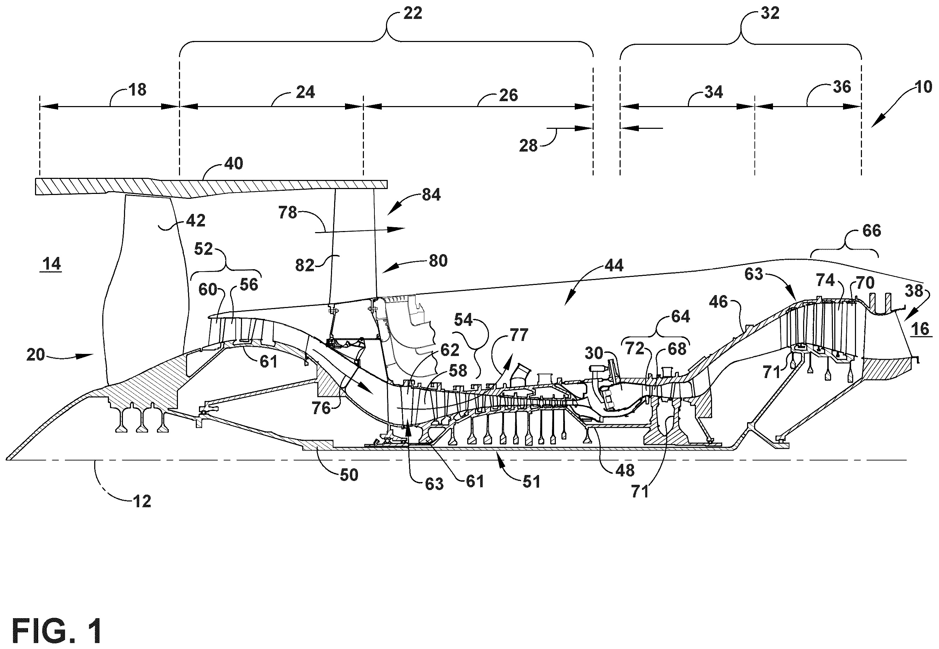

FIG. 1 is a schematic cross-sectional diagram of a turbine engine (e.g. a gas turbine engine) 10 for an aircraft. The turbine engine 10 has a generally longitudinally extending axis or engine centerline 12 extending from forward 14 to aft 16. The turbine engine 10 includes, in a downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a high-pressure (HP) turbine 34, and a low-pressure (LP) turbine 36, and an exhaust section 38.

The fan section 18 includes a fan casing 40 surrounding the fan 20. The fan 20 includes a set of fan blades 42 disposed radially about the engine centerline 12. The HP compressor 26, the combustor 30, and the HP turbine 34 form an engine core 44 of the turbine engine 10, which generates combustion gases. The engine core 44 is surrounded by an engine casing 46, which can be coupled with the fan casing 40.

A high-pressure (HP) shaft 48 is disposed coaxially about the engine centerline 12 of the turbine engine 10 and drivingly connects the HP turbine 34 to the HP compressor 26. A low - pressure (LP) shaft 50, which is disposed coaxially about the engine centerline 12 of the turbine engine 10 within the larger diameter annular HP shaft 48, drivingly connects the LP turbine 36 to the LP compressor 24 and fan 20. The shafts 48, 50 are rotatable about the engine centerline 12 and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 to compress or pressurize the stream of fluid passing through the stage. In a single compressor stage 52, 54, the set of compressor blades 56, 58 can be provided in a ring and can extend radially outward relative to the engine centerline 12, from a blade platform to a tip, while the corresponding static compressor vanes 60, 62 are positioned upstream of and adjacent to the set of compressor blades 56, 58. It is noted that the number of blades, vanes, and compressor stages shown in FIG. 1 were selected for illustrative purposes only, and that other numbers are possible.

The set of compressor blades 56, 58 for a stage of the compressor 24, 26 can be mounted to (or integral to) a disk 61, which is mounted to the corresponding one of the HP and LP shafts 48, 50. The static compressor vanes 60, 62 for a stage of the compressor 24, 26 can be mounted to the engine casing 46 in a circumferential arrangement.

The HP turbine 34 and the LP turbine 36 respectively include a plurality of turbine stages 64, 66, in which a set of turbine blades 68, 70 are rotated relative to a corresponding set of turbine vanes 72, 74, also referred to as a nozzle, to extract energy from the stream of fluid passing through the stage. In a single turbine stage 64, 66, the set of turbine blades 68, 70 can be provided in a ring and can extend radially outward relative to the engine centerline 12 while the corresponding set of turbine vanes 72, 74 are positioned upstream of and adjacent to the set of turbine blades 68, 70. It is noted that the number of blades, vanes, and turbine stages shown in FIG. 1 were selected for illustrative purposes only, and that other numbers are possible.

The set of turbine blades 68, 70 for a stage of the turbine can be mounted to a disk 71, which is mounted to the corresponding one of the HP and LP shafts 48, 50. The set of turbine vanes 72, 74 for a stage of the compressor can be mounted to the engine casing 46 in a circumferential arrangement.

Complementary to the rotor portion, the stationary portions of the turbine engine 10, such as the static compressor vanes 60, 62 or the set of turbine vanes 72, 74 among the compressor and turbine sections 22, 32, respectively, are also referred to individually or collectively as a stator 63. As such, the stator 63 can refer to the combination of non-rotating elements throughout the turbine engine 10.

It will be appreciated that the turbine engine 10 can be split into at last two separate portions: a rotor portion and a stator portion. The rotor portion can be defined as any portion of the turbine engine 10 that rotates about a respective rotational axis. The stator portion can be defined by a combination of non-rotating elements provided within the turbine engine 10. As a non-limiting example, the rotor portion can include one or more of the set of fan blades 42, the set of compressor blades 56, 58, or the set of turbine blades 68, 70. As a non-limiting example, the stator portion can include one or more of the set of airfoil guide vanes 82 (described below), the static compressor vanes 60, 62, or the set of turbine vanes 72, 74.

In operation, the airflow exiting the fan section 18 is split such that a portion of the airflow is channeled into the LP compressor 24, which then supplies a pressurized airflow 76 to the HP compressor 26, which further pressurizes the air. The pressurized airflow 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the turbine engine 10 via the exhaust section 38. The driving of the LP turbine 36 drives the LP shaft 50 to rotate the fan 20 and the LP compressor 24.

A portion of the pressurized airflow 76 can be drawn from the compressor section 22 as bleed air 77. The bleed air 77 can be drawn from the pressurized airflow 76 and provided to engine components for cooling. The temperature of pressurized airflow 76 entering the combustor 30 is significantly increased above the bleed air temperature. The bleed air 77 may be used to reduce the temperature of the core components downstream of the combustor 30. The bleed air 77 can also be utilized by other systems.

Some of the air supplied by the fan 20 can bypass the engine core 44 and be used for cooling of portions, especially hot portions, of the turbine engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

A remaining portion of the airflow exiting the fan section 18, referred to as a bypass air 78, bypasses the LP compressor 24 and engine core 44 and exits the turbine engine 10 through a stationary vane row, and more particularly an outlet guide vane assembly 80, comprising a set of airfoil guide vanes 82, at a fan exhaust side 84. More specifically, a circumferential row of radially extending airfoil guide vanes 82 are utilized adjacent the fan section 18 to exert at least some directional control of the bypass air 78.

The turbine engine 10, as illustrated, is a turbofan engine. It will be appreciated, however, that the turbine engine 10 can be any suitable engine such as, but not limited to, a turbojet, a geared turbofan, a turboprop engine, a turboshaft engine, a ducted turbofan engine, an unducted engine, or an open rotor turbine engine. As a non-limiting example, the turbine engine 10 can be an unducted turbine engine. The unducted turbine engine includes a set of external fan blades and external fan vanes that extend radially outward from a nacelle or exterior casing that houses the engine core. The external fan blades and the external fan fans are similar in function with respect to the set of fan blades 42 and the set of airfoil guide vanes 82, respectively, of the turbine engine 10. It will be appreciated that at least a portion of the external fan blades or the external vane blades can define a radial extreme (e.g., a radially farthest portion from the engine centerline 12) in an unducted turbine engine. In other words, no portion of the turbine engine is provided radially outward from the external fan blades or external fan vanes in an unducted turbine engine.

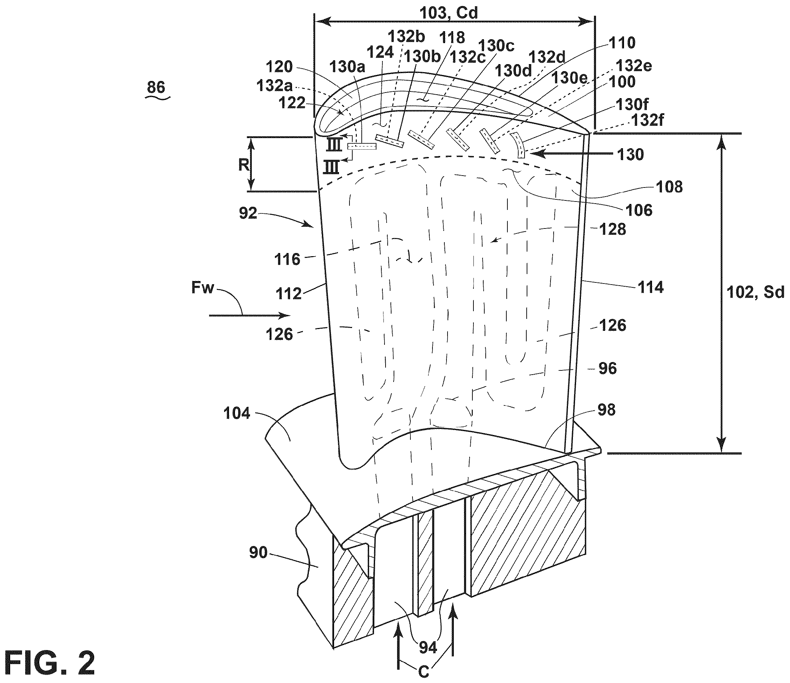

FIG. 2 is a schematic perspective view of an airfoil assembly 86 suitable for use within the turbine engine 10 of FIG. 1. The airfoil assembly 86 includes an airfoil 92. The airfoil 92 has an outer wall 106 and a plurality of elongated outlets 130. The airfoil assembly 86, specifically airfoil 92, is a blade within the set of turbine blades 68. It will be appreciated, however, that the airfoil assembly 86 can be various airfoils or structures located within the turbine engine 10. As a non-limiting example, the airfoil assembly 86 can be a vane, a strut, a service tube, a shroud, a combustion liner, or any other engine component that can require or utilize a plurality of elongated outlets 130. As a non-limiting example, the airfoil assembly 86, specifically the airfoil 92, can be included within at least one of the set of fan blades 42 of FIG. 1, the set of compressor blades 56, 58 of FIG. 1, the set of compressor vanes 60, 62 of FIG. 1, the set of turbine blades 68, 70 of FIG. 1, the set of turbine vanes 72, 74 of FIG. 1, the set of airfoil guide vanes 82 of FIG. 1, or a combination thereof.

The outer wall 106 extends between a root 98 and a tip 100 in a spanwise direction Sd. A distance between the root 98 and the tip 100 defines a span length 102. The outer wall 106 extends between a leading edge 112 and a trailing edge 114 in a chordwise direction Cd. A distance between the leading edge 112 and the trailing edge 114 defines a chord length 103. The outer wall 106 defines a pressure side 108 and a suction side 110. The outer wall 106 defines an interior 116 (shown in phantom lines) of the airfoil 92.

The airfoil 92 includes a cooling circuit 128 (shown in phantom lines) located within the interior 116. The cooling circuit 128 includes a set of cooling conduits 126 (shown in phantom lines) that extend through respective portions of the interior 116. Each cooling conduit of the set of cooling conduits 126 is defined as a tube, channel, or passageway formed within the interior that is configured to direct a flow of fluid within the interior 116 of the airfoil 92. The set of cooling conduits 126 includes various numbers of cooling conduits, such as two cooling conduits as illustrated. However, it will be appreciated that the set of cooling conduits 126 include any number of one or more conduits. The cooling circuit 128 can be various configurations. As a non-limiting example, the cooling circuit 128 can be formed as a winding array of conduits within the interior 116, as illustrated.

The airfoil 92 can include a tip end wall 118 and a tip rail 120. A distal end of the tip rail 120 defines the tip 100 of the airfoil 92. The tip rail 120 extends outwardly from the tip end wall 118 in the spanwise direction Sd. The tip rail 120 defines a tip plenum 122. The tip rail 120 includes a tip rail outer surface 124. The tip rail outer surface 124 forms a respective portion of the outer wall 106 of the airfoil 92. The tip rail outer surface 124 can form a continuous surface with an adjacent portion of the outer wall 106 in the spanwise direction Sd. It will be appreciated that the tip rail 120 can be omitted from airfoil 92. As a non-limiting example, the airfoil 92 can have a flat topped tip without a tip plenum 122.

The plurality of elongated outlets 130 is fluidly coupled to the cooling circuit 128 and opens along the outer wall 106. Put another way, the plurality of elongated outlets 130 is located along a respective portion of the outer wall 106. Specifically, the outer wall 106 includes an outlet region R within which at least a majority of each elongated outlet of the plurality of elongated outlets 130 is located. That is, 50% or more of an area of each elongated outlet of the plurality of elongated outlets 130 is located within the region R. The outlet region R is defined as an area of the outer wall 106 that extends between the leading edge 112 and the trailing edge 114 in the chordwise direction Cd, and between greater than or equal to 80% and less than or equal to 100% of the span length 102 in the spanwise direction Sd, with 100% being the tip 100. When the tip rail 120 is included in the airfoil 92, the outlet region R overlies, at least, an entirety of the tip rail outer surface 124 such that at least a portion of the plurality of elongated outlets 130 open onto the tip rail outer surface 124.

The outlet region R can extend along various portions of the outer wall 106. As a non-limiting example, the outlet region R can extend within the designated area on at least one of the pressure side 108, the suction side 110, or a combination thereof. It is contemplated that in all instances, the outlet region R extends, at least, between greater than or equal to 80% and less than or equal to 100% of the span length 102 in the spanwise direction Sd, with 100% being the tip 100, along the pressure side 108 of the airfoil 92. As a non-limiting example, the outlet region R extends between greater than or equal to 90% and less than or equal to 100% of the span length 102 in the spanwise direction Sd, with 100% being the tip. In one non-limiting example, at least a majority of each elongated outlet of the plurality of elongated outlets 130 is located, at least, along the pressure side 108. The plurality of elongated outlets 130 can be located only on the pressure side 108. The plurality of elongated outlets 130 can also be located on the suction side 110.

The plurality of elongated outlets 130 includes any number of two or more outlets. As a non-limiting example, the plurality of elongated outlets 130 includes a first elongated outlet 130a, a second elongated outlet 130b, a third elongated outlet 130c, a fourth elongated outlet 130d, a fifth elongated outlet 130e, and a sixth elongated outlet 130f, in serial arrangement along the chordwise direction Cd from the leading edge 112 to the trailing edge 114. That is, the first elongated outlet 130a is located nearest the leading edge 112 in the chordwise direction Cd with respect to the plurality of elongated outlets 130 and the sixth elongated outlet 130f is located nearest the trailing edge 114 in the chordwise direction Cd with respect to the plurality of elongated outlets 130.

As used herein, an elongated outlet refers to a hole or cutout formed along a surface, the hole or cutout having a major axis and a minor axis. In a non-limiting example, an elongated outlet can refer to a hole or cutout formed along a surface, the hole or cutout having a major axis having a length that is greater than or equal to four times a length of a minor axis. Thus, each elongated outlet of the plurality of elongated outlets 130 includes a respective major axis 132. That is, the first elongated outlet 130a includes a first major axis 132a, the second elongated outlet 130b includes a second major axis 132b, the third elongated outlet 130c includes a third major axis 132c, the fourth elongated outlet 130d includes a fourth major axis 132d, the fifth elongated outlet 130e includes a fifth major axis 132e, and the sixth elongated outlet 130f includes a sixth major axis 132f. The major axis 132 can be linear. The major axis 132 can be non-linear. As a non-limiting example, the first major axis 132a, the second major axis 132b, the third major axis 132c, the fourth major axis 132d, and the fifth major axis 132e are each linear. In another non-limiting example, the sixth major axis 132f is non-linear. The plurality of major axes 132 can thus include a combination of linear and non-linear major axes.

Each elongated outlet of the plurality of elongated outlets 130 includes a respective cross-sectional area. The cross-sectional area can be equal among two or more of the plurality of elongated outlets 130. Alternatively, each elongated outlet of the plurality of elongated outlets 130 can have varying cross-sectional areas. The cross-sectional area of each elongated outlet of the plurality of elongated outlets 130 is defined by a shape. The shape of the plurality of elongated outlets 130 can be, for example, a rectangle (e.g., the first through fifth elongated outlets 130a-e), an arcuate rectangle (e.g., the sixth elongated outlet 130f), a racetrack, an ellipse, a triangle, a trapezoid, a hexagon, any other suitable shape, or any combination thereof.

The airfoil assembly 86 can include a dovetail 90. The dovetail 90 can include at least one inlet passage 94. The at least one inlet passage 94 can include, for example, two inlet passages 94 as illustrated. The at least one inlet passage 94 includes a supply outlet 96 opening to a respective portion of the cooling circuit 128. The dovetail 90 includes a platform 104. The platform 104 is defined as a portion of the dovetail 90 that confronts an airflow path (e.g., a path or passage including at least one of the pressurized airflow 76 of FIG. 1, the bleed air 77 of FIG. 1, the bypass air 78 of FIG. 1, combustion gases, or any other suitable airflow within the turbine engine 10).

The airfoil 92 is mounted to a respective portion of the dovetail 90. Specifically, the airfoil 92 is mounted to the platform 104 and extends outwardly from the platform 104 in the spanwise direction Sd. As a non-limiting example, the airfoil 92 can be integrally formed with the dovetail 90 and integrally formed with the platform 104. The airfoil 92 can be mounted to the dovetail 90 through various suitable coupling methods such as, but not limited to, bonding, adhesion, welding, fastening, bolting, or the like.

During operation, a working airflow Fw, flows along the outer wall 106 of the airfoil 92. A cooling fluid C can be provided to the inlet passages 94 and into the interior 116 of the airfoil 92 at the supply outlet 96. The cooling fluid C is ultimately fed through the plurality of elongated outlets 130 and exhausted along the outer wall 106. The cooling fluid C is any suitable fluid from within the turbine engine 10 (FIG. 1) that is at a lower temperature than the working airflow Fw flowing over the airfoil 92 (FIG. 2). The cooling fluid C, for example, can be any suitable cooling fluid from an upstream portion of the turbine engine 10 such as, but not limited to, the compressor section 22 of FIG. 1, the bleed air 77 of FIG. 1, the bypass air 78 of FIG. 1, or a combination thereof. The exhausting of the cooling fluid C forms a film of cooling fluid along the outer wall 106. The film of cooling fluid creates a layer of insulation between the working airflow Fw and the outer wall 106, thus reducing the amount of heat transferred from working airflow Fw into the outer wall 106.

The positioning of the plurality of elongated outlets 130 within the outlet region R creates a barrier film of cooling fluid C along the outer wall 106. The film of cooling fluid C creates a layer of insulation between the working airflow Fw and the outer wall 106, thus reducing the amount of heat transferred into the outer wall 106. The pressure side 108 and the suction side 110 can further be defined by a pressure differential between the two that is experienced when the working airflow Fw flows over the outer wall 106. Specifically, the pressure side 108 has a higher pressure than the suction side 110; therefore, the working airflow Fw is urged from the pressure side 108 and to the suction side 110. As such, positioning the outlet region R, at least, on the pressure side 108 ensures that the barrier of the cooling fluid C is created on the pressure side 108, thus limiting the exposure of the working airflow Fw to the airfoil surfaces.

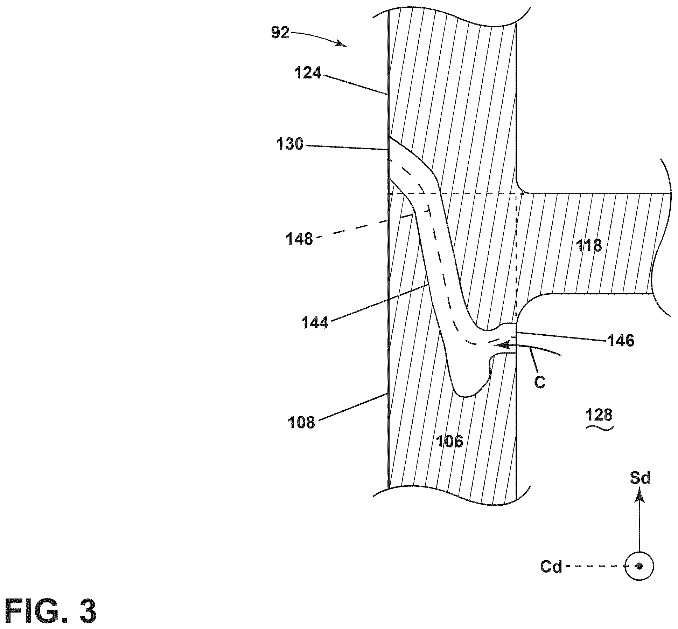

FIG. 3 is schematic a cross-sectional view of the airfoil 92 along sectional line III-III of FIG. 2. The airfoil 92 includes a plurality of cooling passages 144. Each cooling passage of the plurality of cooling passages 144 extends through the outer wall 106 between an inlet 146 located below the tip end wall 118 in the spanwise direction Sd and at least one of the plurality of elongated outlets 130 located on the pressure side 108. For example, each cooling passage of the plurality of cooling passages 144 extends through the outer wall 106 between an inlet 146 and one of the plurality of elongated outlets 130 such that each elongated outlet of the plurality of elongated outlets 130 is fluidly coupled with the cooling circuit 128 by a respective cooling passage 144. Each cooling passage of the plurality of cooling passages 144 includes a passage centerline 148. Although illustrated in FIG. 3 by way of non-limiting example on the tip rail outer surface 124, it should be understood that each elongated outlet of the plurality of elongated outlets 130 can be located anywhere in the outlet region R (FIG. 2).

In operation, cooling fluid C can be provided from the cooling circuit 128 to the plurality of cooling passages 144. Cooling fluid C can be provided such that it flows from the supply outlet 96 to the cooling circuit 128 to the plurality of inlets 146, through the plurality of cooling passages 144, then ultimately through the plurality of elongated outlets 130.

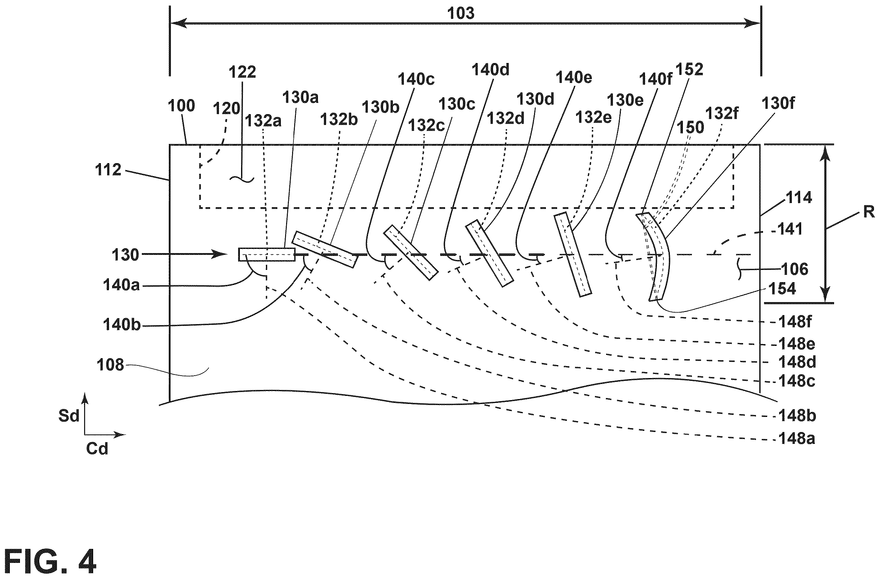

FIG. 4 is a planform view of the outlet region R from the pressure side 108. The plurality of elongated outlets 130 is arranged serially in a row along the chordwise direction Cd. That is, the first elongated outlet 130a is the closest elongated outlet of the plurality of elongated outlets 130 to the leading edge 112 in the chordwise direction Cd, the second elongated outlet 130b is adjacent to and located aft of the first elongated outlet 130a in the chordwise direction Cd, the third elongated outlet 130c is adjacent to and located aft of the second elongated outlet 130b in the chordwise direction Cd, and so on for each subsequent elongated outlet of the plurality of elongated outlets 130 along the chordwise direction Cd towards the downstream edge 114.

For each elongated outlet of the set of elongated outlets 130, the major axis 132 of the elongated outlet terminates at a first distal end 152 and a second distal end 154. For each elongated outlet of the set of elongated outlets, a straight line distance 150 interconnects the first distal end 152 and the second distal end 154. For purposes of illustration, a first distal end 152, a second distal end 154, and a straight line distance 150 are numbered only on the sixth elongated outlet 136f, and the straight line distance 150 is shown as a double dashed line. For each elongated outlet of the set of elongated outlets 130 having a linear major axis 132 (e.g. the first elongated outlet 130a, the second elongated outlet 130b, the third elongated outlet 130c, the fourth elongated outlet 130d, and the fifth elongated outlet 130e), the straight line distance 150 coincides with the major axis 132. For each elongated outlet of the set of elongated outlets 130 having a non-linear major axis 132 (e.g. the sixth elongated outlet 130f), the straight line distance 150 is offset from the major axis 132.

In the illustrated non-limiting example, the passage centerline 148 of each cooling passage of the plurality of cooling passages 144 (FIG. 3) is shown in phantom lines. The first elongated outlet 130a corresponds with a first passage centerline 148a, the second elongated outlet 130b corresponds with a second passage centerline 148b, the third elongated outlet 130c corresponds with a third passage centerline 148c, the fourth elongated outlet 130d corresponds with a fourth passage centerline 148d, the fifth elongated outlet 130e corresponds with a fifth passage centerline 148e, and the sixth elongated outlet 130f corresponds with a sixth passage centerline 148f.

Each passage centerline 148 intersects the straight line distance 150 of a corresponding elongated outlet of the plurality of elongated outlets 130 at an angle having an absolute value of greater than or equal to 60° and less than or equal to 120°. For elongated outlets of the set of elongated outlets 130 having a linear major axis 132, the straight line distance 150 is the major axis 132. As a non-limiting example, each passage centerline 148 is perpendicular to, and forms a 90° angle with, the straight line distance 150 (which can be the major axis 132) of the corresponding elongated outlet of the plurality of elongated outlets 130.

Each passage centerline 148 intersects a chordwise reference line 141 at a passage angle 140. That is, the first passage centerline 148a intersects the chordwise reference line 141 at a first passage angle 140a, the second passage centerline 148b intersects the chordwise reference line 141 at a second passage angle 140b, the third passage centerline 148c intersects the chordwise reference line 141 at a third passage angle 140c, the fourth passage centerline 148d intersects the chordwise reference line 141 at a fourth passage angle 140d, the fifth passage centerline 148e intersects the chordwise reference line 141 at a fifth passage angle 140e, and the sixth passage centerline 148f intersects the chordwise reference line at a sixth passage angle 140f.

The value of each passage angle of the plurality of passage angles 140 decreases serially among the plurality of passage centerlines 148 in the chordwise direction Cd from the leading edge 112 to the trailing edge 114. Decreasing serially, as used herein, means that at least three passage angles of the plurality of passage angles 140 have a value that decreases compared to an adjacent passage angle of the plurality of passage angles 140 that is closer in the chordwise direction Cd to the leading edge 112. The first passage angle 140a is the closest of the plurality of passage angles 140 to the leading edge 112 in the chordwise direction Cd, and the sixth passage angle 140f, being, for example, the last passage angle of the plurality of passage angles 140, is the closest of the plurality of passage angles 140 to the trailing edge 114 in the chordwise direction Cd. The value of the first passage angle 140a is the largest of the plurality of passage angles 140 formed by any of the plurality of passage centerlines 148 and the chordwise reference line 141. That is, the value of the passage angle of the plurality of passage angles 140 that is located closest to the leading edge 112 in the chordwise direction is the largest passage angle of the plurality of passage angles 140. The value of the second passage angle 140b is equal to or less than the first passage angle 140a, the value of the third passage angle 140c is equal to or less than the second passage angle 140b, and so on for each subsequent passage angle 140. For example, it is contemplated that the value of the first passage angle 140a can be the same as the value of the second passage angle 140b, the value of the third passage angle 140c is less than the value of the second passage angle 140b, and the value of the fourth passage angle 140d is less than the value of the third passage angle 140c. In such an example, the value of three passage angles, particularly the first passage angle 140a, the third passage angle 140c, and the fourth passage angle 140d, is considered to serially decrease compared to an adjacent passage angle of the plurality of passage angles 140 that is closer in the chordwise direction Cd to the leading edge 112 even though the value of the first passage angle 140a is the same as the second passage angle 140b. The value of the sixth passage angle 140f is the smallest of the plurality of passage angles 140 formed by any of the plurality of passage centerlines 148 and the chordwise reference line 141. That is, the value of the passage angle of the plurality of passage angles 140 defined by passage centerline 148 corresponding with the elongated outlet of the plurality of elongated outlets 130 that is located closest to the trailing edge 114 in the chordwise direction Cd is the smallest passage angle of the plurality of passage angles 140.

The value in degrees of each passage angle of the plurality of passage angles 140 can be quantified by the following range: $min \left(90,125-%\right) \geq β \geq max \left(0,55-%\right)$ where β refers to a passage angle of the plurality of passage angles 140, % refers to a chordwise location of the intersection between an elongated outlet of the plurality of elongated outlets 130 and its corresponding passage centerline 148 as a percentage of the total chord length 103 where 0% refers to the leading edge 112 and 100% refers to the trailing edge 114, min refers to the lesser of the values calculated in parenthesis, and max refers to the greater of the values calculated in parenthesis. For example, if a passage centerline of the plurality of passage centerlines 148 intersects a corresponding elongated outlet of the plurality of elongated outlets 130 at a position that is 40% of the chord length 103, then the corresponding passage angle 140 is less than or equal to 85° and greater than or equal to 15°.

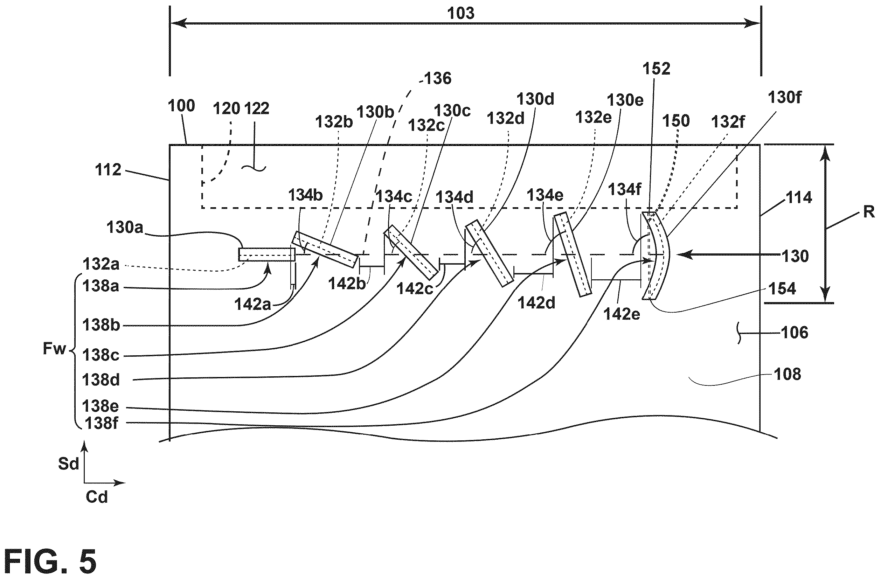

FIG. 5 is a planform view of the outlet region R from the pressure side 108. The plurality of elongated outlets 130 is arranged serially in a row along the chordwise direction Cd. A length of each major axis 132 increases serially between the plurality of elongated outlets 130 in the chordwise direction Cd from the leading edge 112 to the trailing edge 114. The length of the first major axis 132a is the shortest major axis length of any of the plurality of elongated outlets 130. That is, the length of the major axis 132 of the elongated outlet of the plurality of elongated outlets 130 that is closest to the leading edge 112 in the chordwise direction Cd is the shortest major axis length of any of the plurality of elongated outlets 130. The length of the second major axis 132b is greater than the length of the first major axis 132a. The length of the third major axis 132c is greater than both the length of the first major axis 132a and the length of the second major axis 132b, and so on for each of the plurality of elongated outlets 130. The length of the sixth major axis 132f is the longest major axis length of any of the plurality of elongated outlets 130. That is, the length of the major axis 132 of the elongated outlet of the plurality of elongated outlets 130 that is closest to the trailing edge 114 in the chordwise direction Cd is the longest major axis length of any of the plurality of elongated outlets 130.

A projection of the straight line distance 150 of the first elongated outlet 130a, which in the illustrated non-limiting example is a projection of the first major axis 132a, defines a reference line 136. Each subsequent straight line distance 150, which in the illustrated non-limiting example corresponds with the major axis 132b, 132c, 132d, and 132e since the first, second, third, fourth, and fifth elongated outlets 130a, 130b, 130c, 130d, and 130e are linear, forms an outlet angle 134 with respect to the reference line 136. That is, the straight line distance 150, the major axis 132, or a combination thereof of each subsequent elongated outlet of the plurality of elongated outlets 130 following the first elongated outlet 130a in the chordwise direction Cd towards the trailing edge 114 forms an outlet angle 134 with the reference line 136. In a non-limiting example, the first major axis 132a and correspondingly the reference line 136 can be parallel to the engine centerline 12 (FIG. 1) (e.g. extend axially). The second major axis 132b and the reference line 136 form a second outlet angle 134b. The third major axis 132c and the reference line 136 form a third outlet angle 134c. The fourth major axis 132d and the reference line 136 form a fourth outlet angle 134d. The fifth major axis 132e and the reference line 136 form a fifth outlet angle 134e. The straight line distance 150 of the sixth elongated outlet 130f and the reference line 136 form a sixth outlet angle 134f.

The value of each outlet angle of the plurality of outlet angles 134 increases serially among the plurality of elongated outlets 130 in the chordwise direction Cd from the leading edge 112 to the trailing edge 114. Increasing serially, as used herein, means that at least two outlet angles of the plurality of outlet angles 134 have a value that increases compared to an adjacent outlet angle of the plurality of outlet angles 134 that is closer in the chordwise direction Cd to the leading edge 112. The second elongated outlet 130b is the closest of the plurality of elongated outlets 130 to the first elongated outlet 130a in the chordwise direction Cd, and the sixth elongated outlet 130f, being, for example, the last outlet of the plurality of elongated outlets 130, is the furthest of the plurality of elongated outlets 130 from the first elongated outlet 130a in the chordwise direction Cd. The value of the second outlet angle 134b is the smallest outlet angle formed by the straight line distance 150, the major axis 132, or a combination thereof of any of the plurality of elongated outlets 130 and the reference line 136. That is, the value of the outlet angle of the plurality of outlet angles 134 that is located closest to the leading edge 112 in the chordwise direction is the smallest of the plurality of outlet angles 134. The value of the third outlet angle 134c is equal to or greater than the second outlet angle 134b, the value of the fourth outlet angle 134d is equal to or greater than the third outlet angle 134c, and so on for each subsequent outlet angle 134. For example, it is contemplated that the value of the second outlet angle 134b can be the same as the value of the third outlet angle 134c, the value of the fourth outlet angle 134d is greater than the value of the third outlet angle 134c, and the value of the fifth outlet angle 134e is greater than the value of the fourth passage angle 134d. In such an example, the value of two outlet angles, particularly the fourth outlet angle 134d and the fifth outlet angle 134e, is considered to serially increase compared to an adjacent outlet angle of the plurality of outlet angles 134 that is closer in the chordwise direction Cd to the leading edge 112 even though the value of the third outlet angle 134c is the same as the second outlet angle 134b. The value of the sixth outlet angle 134f is the largest outlet angle formed by the straight line distance 150, the major axis 132, or a combination thereof of any elongated outlet of the plurality of elongated outlets 130 and the reference line 136. That is, the value of the outlet angle of the plurality of outlet angles 134 defined by the major axis 132 of the elongated outlet of the plurality of elongated outlets 130 that is located closest to the trailing edge 114 in the chordwise direction Cd is the largest of the plurality of outlet angles 134.

Each outlet angle 134 is an acute angle. As used herein, acute refers to any angle less than 90°. In a non-limiting example, each outlet angle 134 falls in a range from greater than or equal to 10° and less than or equal to 80°. In another non-limiting example, each outlet angle 134 falls in a range from greater than or equal to 30° and less than or equal to 70°. Further, for each elongated outlet of the plurality of elongated outlets 130, the value of a corresponding outlet angle 134 and a corresponding passage angle 140 can be related. For example, a passage angle 140 can be quantified by the following range: $β = 90 ° - θ$ where β refers to a passage angle 140 and θ refers to a corresponding outlet angle 134.

By serially increasing the value of each outlet angle of the plurality of outlet angles 134 with respect to the first major axis 132a along the chordwise direction Cd, during operation a gas path streamline of a plurality of gas path streamlines 138 is perpendicular to the straight line distance 150, the major axis 132, or a combination thereof of each of the plurality of elongated outlets 130. That is, a first gas path streamline 138a forms a 90° angle with the first major axis 132a, a second gas path streamline 138b forms a 90° angle with the second major axis 132b, a third gas path streamline 138c forms a 90° angle with the third major axis 132c, a fourth gas path streamline 138d forms a 90° angle with the fourth major axis 132d, a fifth gas path streamline 138e forms a 90° angle with the fifth major axis 132e, and a sixth gas path streamline 138f forms a 90° angle with the sixth major axis 132f.. Each of the plurality of gas path streamlines 138 is part of the working airflow Fw that is urged from the pressure side 108 to the suction side 110 (FIG. 2).

By orienting the plurality of elongated outlets 130 such that each straight line distance 150, major axis 132, or a combination thereof forms a 90° angle with each respective gas path streamline of the plurality of gas path streamlines 138, working airflow Fw is mixed with cooling fluid C before flowing over the tip 100 and to the suction side 110 (FIG. 2), which increases the cooling efficiency of the airfoil tip region R.

A plurality of chordwise distances 142 each spanning between adjacent ones of the plurality of elongated outlets 130 can also increase serially in the chordwise direction Cd from the leading edge 112 to the trailing edge 114. A first chordwise distance 142a is defined between a point of the first elongated outlet 130a that is closest to the trailing edge 114 in the chordwise direction Cd and a point of the second elongated outlet 130b that is closest to the leading edge 112 in the chordwise direction Cd. A second chordwise distance 142b is defined between a point of the second elongated outlet 130b that is closest to the trailing edge 114 in the chordwise direction Cd and a point of the third elongated outlet 130c that is closest to the leading edge 112 in the chordwise direction Cd. A third chordwise distance 142c is defined between a point of the third elongated outlet 130c that is closest to the trailing edge 114 in the chordwise direction Cd and a point of the fourth elongated outlet 130d that is closest to the leading edge 112 in the chordwise direction Cd. A fourth chordwise distance 142d is defined between a point of the fourth elongated outlet 130d that is closest to the trailing edge 114 in the chordwise direction Cd and a point of the fifth elongated outlet 130e that is closest to the leading edge 112 in the chordwise direction Cd. A fifth chordwise distance 142e is defined between a point of the fifth elongated outlet 130e that is closest to the trailing edge 114 in the chordwise direction Cd and a point of the sixth elongated outlet 130f that is closest to the leading edge 112 in the chordwise direction Cd.

Of the plurality of chordwise distances 142, the first chordwise distance 142a can be the least. That is, the chordwise distance closest to the leading edge 112 in the chordwise direction Cd can be the least of the plurality of chordwise distances 142. The second chordwise distance 142b can be greater than the first chordwise distance 142a. The third chordwise distance 142c can be greater than both the first chordwise distance 142a and the second chordwise distance 142b. The fourth chordwise distance 142d can be greater than all of the first chordwise distance 142a, the second chordwise distance 142b, and the third chordwise distance 142c. Of the plurality of chordwise distances 142, the fifth chordwise distance 142e can be the greatest. That is, the chordwise distance closest to the trailing edge 114 in the chordwise direction Cd can be the greatest of the plurality of chordwise distances 142.

The plurality of elongated outlets 130 can include outlets that are partially overlapping in the spanwise direction Sd. For example, the point of the first elongated outlet 130a that is closest to the trailing edge 114 in the chordwise direction Cd and the point of the second elongated outlet 130b that is closest to the leading edge 112 in the chordwise direction Cd overlap in the spanwise direction Sd as depicted in FIGS. 2 and 4. In configurations where two adjacent elongated outlets of the plurality of elongated outlets 130 overlap in the spanwise direction Sd, the chordwise distance 142 therebetween can be considered to be negative. That is, serially increasing the chordwise distance 142 between adjacent outlets of the plurality of elongated outlets 130 in the chordwise direction can include increasing from a negative chordwise distance 142 where adjacent outlets of the plurality of elongated outlets 130 overlap to another negative chordwise distance 142 that is relatively closer to zero including relatively less overlap, or to a positive chordwise distance 142 where adjacent outlets of the plurality of elongated outlets 130 do not overlap at all. For example, the first chordwise distance 142a can be considered negative, and the second chordwise distance 142b is greater than the first chordwise distance 142a since the second elongated outlet 130b and the third elongated outlet 130c do not overlap at any point along the spanwise direction Sd.

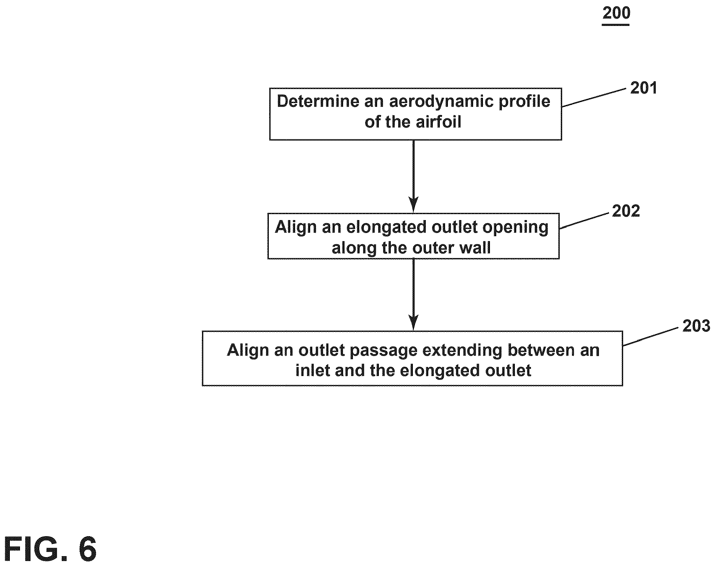

FIG. 6 is a flow chart illustrating an exemplary method 200 of forming the airfoil 92 of FIGS. 2-5. The method 200 includes determining an aerodynamic profile of the airfoil 92 (FIG. 2), the airfoil including an outer wall 106 (FIGS. 2-5) bounding an interior 116 (FIG. 2), the outer wall 106 having a tip end wall 118 (FIG. 2) at 201. The method 200 further includes aligning one of a plurality of elongated outlets 130 (FIGS. 2-5) along the outer wall 106 (FIGS. 2-4), the elongated outlet having a major axis 132 (FIG. 2 and FIGS. 4-5) that forms a right angle with respect to a localized airflow in the form of a gas path streamline 138 (FIG. 4) that flows over the elongated outlet during operation of the turbine engine 10 (FIG. 1), at 202. The method further includes one of a plurality of cooling passages 144 (FIG. 3) extending between an inlet 146 (FIG. 3) and the elongated outlet such that a passage centerline 148 (FIGS. 3-4) of the cooling passage is parallel to the gas path streamline at the elongated outlet at 203.

The sequences depicted is for illustrative purposes only and is not meant to limit the method 200 in any way as it is understood that the portions of the method can proceed in a different logical order, additional or intervening portions can be included, or described portions of the method can be divided into multiple portions, or described portions of the method can be omitted without detracting from the described method. For example, the method 200 can include various other additional or intervening portions. The examples provided herein are meant to be non-limiting.

As a non-limiting example, the method 200 can include additively manufacturing at least a portion of the airfoil 92 (FIG. 2) that includes the plurality of elongated outlets 130 (FIGS. 2-5), the plurality of cooling passages 144 (FIG. 3) and the corresponding plurality of passage centerlines 148 (FIGS. 3-4). Put another way, the method 200 can include forming the airfoil 92 as a single, unitary body. An additive manufacturing (AM) process is where a component is built layer-by-layer by successive deposition of material. AM is an appropriate name to describe the technologies that build 3D objects by adding layer-upon-layer of material, whether the material is plastic or metal. AM technologies can utilize a computer, 3D modeling software (Computer Aided Design or CAD), machine equipment, and layering material. Once a CAD sketch is produced, the AM equipment can read in data from the CAD file and lay down or add successive layers of liquid, powder, sheet material or other material, in a layer-upon-layer fashion to fabricate a 3D object. It should be understood that the term "additive manufacturing" encompasses many technologies including subsets like 3D Printing, Rapid Prototyping (RP), Direct Digital Manufacturing (DDM), layered manufacturing and additive fabrication. Non-limiting examples of additive manufacturing that can be utilized to form an additively-manufactured component include powder bed fusion, vat photopolymerization, binder jetting, material extrusion, directed energy deposition, material jetting, or sheet lamination. Additive manufacturing, such as 3D printing, direct metal laser melting, direct metal laser sintering, or electroforming, can provide for forming the complex geometries as described herein, where such formation by way of traditional manufacture, such as casting or drilling, can be challenging, costly, or time consuming, as well as having poor yields. Further the cooling passages described herein can be produced via indirect additive method, i.e. print the cores and cast, or casting via additively producing a core, or making the core via RMC can also be utilized.

It should be appreciated that application of the disclosed design is not limited to turbine engines with fan and booster sections but is applicable to turbojets and turbo engines as well. It should also be appreciated that the cooling circuit as described herein can be provided in any portion of an airfoil or engine component. Furthermore, the cooling hole geometry can have applicability in other engine components, beyond that of an airfoil, such as in a blade, a vane, a strut, a shroud, or a combustor liner in non-limiting examples.

To the extent not already described, the different features and structures of the various aspects can be used in combination, or in substitution with each other as desired. That one feature is not illustrated in all the examples is not meant to be construed that it cannot be so illustrated but is done for brevity of description. Thus, the various features of the different aspects can be mixed and matched as desired to form new aspects, whether or not the new aspects are expressly described. All combinations or permutations of features described herein are covered by this disclosure. For example, although an airfoil having a plurality of elongated outlets (e.g. the plurality of elongated outlets 130) with multiple serially changing values (e.g. the major axis length 132, the passage angle 140, the outlet angle 134, and the chordwise distance 142) is illustrated, it is contemplated that an airfoil having a plurality of elongated outlets can include only one serially changing value or any combination of multiple serially changing values.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the disclosure are provided by the subject matter of the following clauses:
An airfoil for a turbine engine, the turbine engine having an engine centerline, the airfoil comprising: an outer wall bounding an interior, the outer wall defining an outer surface extending between a leading edge and a trailing edge in a chordwise direction, and between a root and a tip in a spanwise direction to define a span length of the airfoil, the outer wall defining a suction side and a pressure side, a cooling circuit located within the interior, a tip end wall at least partially defining the interior, a tip rail extending outwardly from the tip end wall and defining a respective portion of the tip, the tip rail having an outer surface defining a respective portion of the outer wall, a plurality of elongated outlets fluidly coupled to the cooling circuit and opening only onto a portion of the outer surface corresponding to the pressure side, each elongated outlet of the plurality of elongated outlets including a major axis, the plurality of elongated outlets comprising a first elongated outlet including a first major axis, a projection of the first major axis defining a reference line, a second elongated outlet having a second major axis, the second major axis forming a second acute outlet angle with respect to the reference line, the second elongated outlet being adjacent to and located aft of the first elongated outlet in the chordwise direction, and a third elongated outlet having a third major axis, the third major axis forming a third acute outlet angle with respect to the reference line, the third elongated outlet being adjacent to and located aft of the second elongated outlet in the chordwise direction wherein a value of the third acute outlet angle is greater than a value of the second acute outlet angle, and a point of the first elongated outlet located closest to the trailing edge is located a first chordwise distance from a point of the second elongated outlet located closest to the leading edge, a point of the second elongated outlet located closest to the trailing edge is located a second chordwise distance from a point of the third elongated outlet located closest to the leading edge, with the first chordwise distance being greater than the second chordwise distance.

An airfoil for a turbine engine, the turbine engine having an engine centerline, the airfoil comprising an outer wall bounding an interior, the outer wall defining an outer surface extending between a leading edge and a trailing edge in a chordwise direction, and between a root and a tip in a spanwise direction to define a span length of the airfoil, a cooling circuit located within the interior, and a plurality of elongated outlets fluidly coupled to the cooling circuit and opening onto the outer wall, the plurality of elongated outlets comprising, a first elongated outlet including a first major axis, a projection of the first major axis defining a reference line, a second elongated outlet having a second major axis, the second major axis forming a second acute outlet angle with respect to the reference line, the second elongated outlet being adjacent to and located aft of the first elongated outlet in the chordwise direction, and a third elongated outlet having a third major axis, the third major axis forming a third acute outlet angle with respect to the reference line, the third elongated outlet being adjacent to and located aft of the second elongated outlet in the chordwise direction, wherein a value of the third acute outlet angle is greater than a value of the second acute outlet angle.

The airfoil of any preceding clause, wherein the major axis of each subsequent elongated outlet of the plurality of elongated outlets following the first elongated outlet towards the trailing edge in the chordwise direction forms an acute outlet angle with the reference line, with a value of the acute outlet angle increasing serially among the plurality of elongated outlets in the chordwise direction.

The airfoil of any preceding clause, wherein a chordwise distance spanning between each two adjacent elongated outlets of the plurality of elongated outlets increases serially in the chordwise direction among the plurality of elongated outlets.

The airfoil of any preceding clause, further comprising an outlet region of the outer wall within which at least a majority of each elongated outlet of the plurality of elongated outlets is located, the outlet region being an area of the outer wall between greater than or equal to 80% and less than or equal to 100% of the span length, with 100% being the tip.

The airfoil of any preceding clause, wherein the airfoil includes a pressure side and a suction side, and the outlet region extends along the pressure side.

The airfoil of any preceding clause, wherein the outlet region extends along the suction side.

The airfoil of any preceding clause, wherein the outlet region extends along both the pressure side and the suction side.

The airfoil of any preceding clause, further comprising a tip end wall, and a tip rail extending outwardly from the tip end wall, the tip rail defining a respective portion of the tip, the tip rail having an outer surface defining a respective portion of the outer wall.

The airfoil of any preceding clause, wherein at least a portion of the plurality of elongated outlets open onto the outer surface.

The airfoil of any preceding clause, wherein each of the plurality of elongated outlets includes a major axis, with a length of each major axis increasing serially in the chordwise direction among the plurality of major axes.

The airfoil of any preceding clause, wherein the second acute outlet angle and the third acute outlet angle are greater than or equal to 0° and less than 90°.

The airfoil of any preceding clause, wherein the major axis of each subsequent elongated outlet of the plurality of elongated outlets following the first elongated outlet towards the trailing edge in the chordwise direction forms an acute outlet angle with the reference line, the first elongated outlet is located nearest the leading edge in the chordwise direction with respect to the plurality of elongated outlets, the second elongated outlet is located between the first elongated outlet and the third elongated outlet in the chordwise direction, the third elongated outlet is located nearest the trailing edge in the chordwise direction with respect to the plurality of elongated outlets and the second acute outlet angle is a smallest acute outlet angle formed by the major axis of any of the plurality of elongated outlets and the reference line, and the third acute outlet angle is a largest acute outlet angle formed by the major axis of any of the plurality of elongated outlets and the axial reference line.

The airfoil of any preceding clause, wherein each of the plurality of elongated outlets includes a respective major axis and a minor axis, the major axis having a length that is greater than or equal to four times a length of the minor axis.

The airfoil of any preceding clause, wherein a chordwise distance spanning between each two adjacent elongated outlets of the plurality of elongated outlets increases serially in the chordwise direction.

The airfoil of any preceding clause, further comprising a cooling passage extending between an inlet that opens to the cooling circuit, and the first elongated outlet, the cooling passage including a passage centerline.

The airfoil of any preceding clause, wherein the passage centerline is perpendicular to the first major axis.

The airfoil of any preceding clause, wherein the passage centerline forms an angle having an absolute value of greater than or equal to 60° and less than or equal to 120°.

The airfoil of any preceding clause, further comprising a plurality of cooling passages each extending between an inlet that opens to the cooling circuit, and a respective one of the plurality of elongated outlets, each of the plurality of cooling passages including a passage centerline that is perpendicular to the major axis of the respective one of the plurality of elongated outlets.

The airfoil of any preceding clause, wherein each of the plurality of passage centerlines intersects a chordwise reference line at a respective passage angle, and a value of each passage angle of the plurality of passage angles decreases serially among the plurality of passage centerlines in the chordwise direction from the leading edge to the trailing edge.

The airfoil of any preceding clause, further comprising a plurality of cooling passages each extending between an inlet that opens to the cooling circuit and at least one of the plurality of elongated outlets and including a passage centerline.

The airfoil of any preceding clause, wherein each of the plurality of passage centerlines form a passage angle with a chordwise reference line, with a value of the passage angle decreasing serially in the chordwise direction.

The airfoil of any preceding clause, wherein the outer wall defines a suction side and a pressure side, with the plurality of elongated outlets being provided on the pressure side e.g. only on the pressure side.

The airfoil of any preceding clause, wherein the plurality of elongated outlets is provided on both the pressure side and the suction side.

The airfoil of any preceding clause, wherein each of the plurality of elongated outlets includes a cross-sectional area that forms one of a rectangle, an arcuate rectangle, a racetrack, an ellipse, a triangle, a trapezoid, or a hexagon.

The airfoil of any preceding clause, wherein the major axis of each of the plurality of elongated outlets is linear.

The airfoil of any preceding clause, wherein the major axis of each of the plurality of elongated outlets is non-linear.

The airfoil of any preceding clause, wherein the plurality of major axes includes a combination of linear and non-linear major axes.

The airfoil of any preceding clause, wherein the turbine engine includes a compression section, a combustion section, and a turbine section in serial flow arrangement, with the airfoil being located within the turbine section.

The airfoil of any preceding clause, wherein the airfoil is mounted to a respective portion of a dovetail.

The airfoil of any preceding clause, wherein the airfoil is integrally formed with a dovetail and a platform.

A turbine engine including a compression section, a combustion section, and a turbine section in serial flow arrangement, with the airfoil of any preceding clause being located within the turbine section.

A method of forming an airfoil for a turbine engine, the method comprising: determining an aerodynamic profile of the airfoil, the airfoil including an outer wall bounding an interior, the outer wall having a tip end wall, and aligning an elongated outlet opening along the outer wall, the elongated outlet having a major axis that forms a right angle with respect to a streamline airflow that flows over the elongated outlet during operation of the turbine engine.

The method of any preceding clause, further comprising aligning a cooling passage extending between an inlet and the elongated outlet such that a passage centerline of the cooling passage is parallel to the streamline airflow at the elongated outlet.

## Claims

1. An airfoil (92) for a turbine engine (10), the turbine engine (10) having an engine centerline 12, the airfoil (92) comprising:
an outer wall (106) bounding an interior (116), the outer wall (106) defining an outer surface extending between a leading edge (112) and a trailing edge (114) in a chordwise direction, and between a root (98) and a tip (100) in a spanwise direction to define a span length (102) of the airfoil (92);
a cooling circuit (128) located within the interior (116); and
a plurality of elongated outlets (130) fluidly coupled to the cooling circuit (128) and opening onto the outer wall (106), the plurality of elongated outlets (130) comprising;
a first elongated outlet (130a) including a first major axis (132a), a projection of the first major axis (132a) defining a reference line (136);
a second elongated outlet (130b) having a second major axis (132b), the second major axis (132b) forming a second acute outlet angle (134b) with respect to the reference line (136), the second elongated outlet (130b) being adjacent to and located aft of the first elongated outlet (130a) in the chordwise direction; and
a third elongated outlet (130c) having a third major axis (132c), the third major axis (132c) forming a third acute outlet angle (134c) with respect to the reference line (136), the third elongated outlet (130c) being adjacent to and located aft of the second elongated outlet (130b) in the chordwise direction;
wherein a value of the third acute outlet angle (134c) is greater than a value of the second acute outlet angle (134b).

2. The airfoil (92) of claim 1, further comprising an outlet region of the outer wall (106) within which at least a majority of each elongated outlet of the plurality of elongated outlets (130) is located, the outlet region being an area of the outer wall (106) between greater than or equal to 80% and less than or equal to 100% of the span length (102), with 100% being the tip (100).

3. The airfoil (92) of any of claims 1-2, further comprising:
a tip end wall (118); and
a tip rail (120) extending outwardly from the tip end wall, the tip rail (120) defining a respective portion of the tip (100), the tip rail (120) having an outer surface (124) defining a respective portion of the outer wall (106).

4. The airfoil (92) of claim 3, wherein at least a portion of the plurality of elongated outlets (130) open onto the outer surface (124).

5. The airfoil (92) of any of claims 1-4, wherein each of the plurality of elongated outlets (130) includes a respective major axis (132), with a length of each major axis (132) increasing serially in the chordwise direction among the plurality of major axes (132).

6. The airfoil (92) of any of claims 1-5, wherein the second acute outlet angle (134b) and the third acute outlet angle (134c) are greater than or equal to 0° and less than 90°.

7. The airfoil (92) of any of claims 1-6, wherein
the major axis (132) of each subsequent elongated outlet of the plurality of elongated outlets (130) following the first elongated outlet (130a) towards the trailing edge (114) in the chordwise direction forms an acute outlet angle (134) with the reference line (136);
the first elongated outlet (130a) is located nearest the leading edge (112) in the chordwise direction with respect to the plurality of elongated outlets (130);
the second elongated outlet (130b) is located between the first elongated outlet (130a) and the third elongated outlet (130c) in the chordwise direction;
the third elongated outlet (130c) is located nearest the trailing edge (114) in the chordwise direction with respect to the plurality of elongated outlets (130); and
the second acute outlet angle (134b) is a smallest acute outlet angle (134) formed by the major axis (132) of any of the plurality of elongated outlets (130) and the reference line (136), and the third acute outlet angle (134c) is a largest acute outlet angle (134) formed by the major axis (132) of any of the plurality of elongated outlets (130) and the reference line (136).

8. The airfoil (92) of any of claims 1-7, wherein a chordwise distance (103) spanning between each two adjacent elongated outlets of the plurality of elongated outlets (130) increases serially in the chordwise direction.

9. The airfoil (92) of any of claims 1-8, further comprising a cooling passage (144) extending between an inlet (146) that opens to the cooling circuit (128), and the first elongated outlet (130a), the cooling passage (144) including a passage centerline (148).

10. The airfoil (92) of any of claims 1-9, wherein the passage centerline (148) is perpendicular to the first major axis (132a).

11. The airfoil (92) of any of claims 1-10, further comprising a plurality of cooling passages (144) each extending between an inlet (146) that opens to the cooling circuit (128) and at least one of the plurality of elongated outlets (130) and including a passage centerline (148).

12. The airfoil (92) of claim 11, wherein each of the plurality of passage centerlines (148) form a passage angle (140) with a chordwise reference line (141), with a value of the passage angle (140) decreasing serially in the chordwise direction.

13. The airfoil (92) of any of claims 1-12, wherein the outer wall (106) defines a suction side (110) and a pressure side (108), with the plurality of elongated outlets (130) being provided only on the pressure side (110).

14. The airfoil (92) of any of claims 1-13, wherein each of the plurality of elongated outlets (130) includes a cross-sectional area that forms one of a rectangle, an arcuate rectangle, a racetrack, an ellipse, a triangle, a trapezoid, or a hexagon.

15. The airfoil (92) of any of claims 1-14, wherein the turbine engine (10) includes a compressor section (22), a combustion section (28), and a turbine section (32) in serial flow arrangement, with the airfoil (92) being located within the turbine section (32).
